# EUROPEAN PATENT APPLICATION

(11) **EP 4 131 134 A1**
(43) Date of publication of application: **08.02.2023**
(21) Application number: 20927628.6
(22) Date of filing: 03.09.2020
(51) Int. Cl.: G06Q 50/30

(54) **RESOURCE MANAGEMENT PLAN ASSISTANCE DEVICE AND RESOURCE MANAGEMENT PLAN ASSISTANCE METHOD**

(30) Priority: 26.03.2020 JP 2020056236
(71) Applicant: Hitachi, Ltd., Tokyo 100-8280 (JP)
(72) Inventor: YAMASHITA, Yuko, Tokyo 100-8280 (JP); KOBAYASHI, Yuichi, Tokyo 100-8280 (JP); MAEKAWA, Yuki, Tokyo 100-8280 (JP); KAZAWA, Yui, Tokyo 100-8280 (JP); OKADA, Kenichiro, Tokyo 100-8280 (JP); KODERA, Yoshimi, Tokyo 100-8280 (JP); TAKAHASHI, Maiko, Tokyo 100-8280 (JP)
(74) Representative: Mewburn Ellis LLP
(86) International application number: PCT/JP2020/033386
(87) International publication number: WO 2021/192354

(57) **Abstract**

Provided is a resource operation planning assistance apparatus for automatically generating a change tendency from a past resource operation planning change history, using the change tendency to generate a solution proposal to an inconsistency in a resource operation planning, and presenting the solution proposal together with a priority order. The resource operation planning assistance apparatus includes: a schedule candidate creation unit configured to create a schedule candidate of each resource; a history learning unit configured to learn an operation planning history in advance to generate a schedule change rule; a schedule candidate list creation unit configured to create a schedule candidate list for an operation planning target resource; a planning creation unit configured to create, with respect to at least one violation included in an operation planning, an operation planning for solving the violation; and an operation change content display unit. The resource operation planning assistance apparatus is configured to apply the schedule change rule created by the history learning unit in advance to the schedule candidates created by the schedule candidate creation unit to calculate an adoption rate for each schedule candidate. The operation change content display unit is configured to display the operation planning created by the planning creation unit in a priority order by using, as input, the schedule candidate list for each resource created by the schedule candidate list creation unit.

## Description

### Technical Field

The present invention relates to a resource operation planning assistance apparatus and a resource operation planning assistance method.

### Background Art

In fields of transportation service industries, manufacturing industries, and the like that require a plurality of resources such as a large number of transportation machines and various apparatuses, not only daily operation plans related to such transportation machines and the like, but also operation plans of respective resources for maintaining quality and safety of services and products are created and managed.

For example, in the field of railway business, together with a daily train operation planning, a maintenance planning corresponding to a periodic inspection of a train set constituting a train (which means a set of a plurality of vehicles to be assigned to the train) and a shunting yard planning relating to a train set movement in a depot are created.

When a vehicle breakdown, an accident, or the like causes a delay in a railway operation timetable, a train set used for each train and an assignment planning of crews who are scheduled to work on the train may be affected and need to be rescheduled. In view of this, there has been a technique of presenting an operation planning change proposal for train sets or crews in this situation. Creation of the operation planning change proposal refers to, taking the case of train sets as an example, determining a use planning of each train set (referred to as "schedule") by assigning the train set to each train without shortage in accordance with an operation planning change.

Background art includes PTL 1. PTL 1 discloses that in an operation planning assistance system for crews in a railway, an alarm content is displayed by clicking an alarm mark on a timetable illustrating a violation in an operation plan, and a change proposal for crew operation information is displayed together with a forecast of a solution of the violation and a prediction value of a predetermined evaluation index by clicking a proposal button in the alarm content. It is also disclosed that a case where a forecast of solution cannot be established by using a usual practice is displayed as stuck, indicating that the usual practice cannot be used.

### Citation list

### Patent Literature

PTL 1: JP-2017-A-97520

### Summary of Invention

### Technical Problem

PTL 1 requires to register the usual practice in advance, which may involve enormous patterns that cannot be covered, leading to a high development cost. Further, the same values of evaluation indices are not in priority order, and thus may be difficult for a user to determine.

The invention proposes a resource operation planning assistance apparatus and a resource operation planning assistance method for automatically generating a change tendency from a past resource operation planning change history, using the change tendency to generate a solution proposal to an inconsistency in an operation planning, and presenting the solution proposal together with a priority order.

### Solution to Problem

A preferable example of the resource operation planning assistance apparatus of the invention includes: a schedule candidate creation unit configured to create a schedule candidate of each resource; a history learning unit configured to learn an operation planning history in advance to generate a schedule change rule; a schedule candidate list creation unit configured to create a schedule candidate list for an operation planning target resource; a planning creation unit configured to create, with respect to at least one violation included in an operation planning, an operation planning for solving the violation; and an operation change content display unit. The resource operation planning assistance apparatus is configured to apply the schedule change rule created by the history learning unit in advance to the schedule candidates created by the schedule candidate creation unit to calculate an adoption rate for each schedule candidate. The operation change content display unit is configured to display the operation planning created by the planning creation unit in a priority order by using, as input, the schedule candidate list for each resource created by the schedule candidate list creation unit.

As another feature of the invention, in the resource operation planning assistance apparatus, the history learning unit is configured to generate the schedule change rule by learning a tendency in a schedule change present in the operation planning history using training data for changing a weight of the adoption rate of the schedule change according to a magnitude of an evaluation index.

As another feature of the invention, in the resource operation planning assistance apparatus, the schedule candidate list creation unit is configured to combine the schedule candidate of each operation planning target resource with resource information and delay and trouble information, apply the combination to the schedule change rule to calculate the adoption rate for each schedule candidate such that a better schedule candidate has a higher adoption rate, and to combine each schedule candidate and the corresponding adoption rate to create the schedule candidate list.

A preferable example of the resource operation planning assistance method of the invention includes: a schedule candidate creation step of creating a schedule candidate of each resource; a history learning step of learning an operation planning history in advance to generate a schedule change rule; a schedule candidate list creation step of creating a schedule candidate list for an operation planning target resource; a planning creation step of creating, with respect to at least one violation included in an operation planning, an operation planning for solving the violation; and an operation change content display step. The schedule change rule created by the history learning step in advance is applied to the schedule candidate created by the schedule candidate creation step to calculate an adoption rate for each schedule candidate. The operation change content display step displays the operation planning created by the planning creation step in a priority order by using, as input, the schedule candidate list for each resource created by the schedule candidate list creation step.

### Advantageous Effect

According to the invention, tendency information can be automatically generated from a past resource operation change history and reflected in resource operation change proposal generation. The change proposal is presented together with the priority order, and thus is easy for a user to determine.

### Brief Description of Drawings

[FIG. 1] FIG. 1 is a diagram illustrating a system configuration of a resource operation planning assistance apparatus according to the present embodiment.
[FIG. 2] FIG. 2 is a diagram illustrating an example of operation planning history information.
[FIG. 3] FIG. 3 is a diagram illustrating an example of train timetable information.
[FIG. 4] FIG. 4 is a flowchart illustrating a processing procedure example of a history learning unit.
[FIG. 5] FIG. 5 is a flowchart illustrating a processing procedure example of a planning creation unit.
[FIG. 6] FIG. 6 is a flowchart illustrating a processing procedure example of a schedule candidate creation unit.
[FIG. 7] FIG. 7 is a flowchart illustrating a processing procedure example of a schedule candidate list creation unit.
[FIG. 8] FIG. 8 is a flowchart illustrating a processing procedure example of an operation change extraction unit.
[FIG. 9] FIG. 9 is a flowchart illustrating a processing procedure example of step S806 in FIG. 8.
[FIG. 10] FIG. 10 is a diagram illustrating a first screen example of the resource operation planning assistance apparatus according to the present embodiment.
[FIG. 11] FIG. 11 is a diagram illustrating a second screen example of the resource operation planning assistance apparatus according to the present embodiment.
[FIG. 12] FIG. 12 is a diagram illustrating a third screen example of the resource operation planning assistance apparatus according to the present embodiment.

### Description of Embodiments

Hereinafter, embodiments of the invention will be described with reference to the drawings.

In the present embodiment, a vehicle operation planning assistance apparatus with railway train sets as resources will be described as an application target example of the invention. A violation to be processed will be described with one violation selected by the user as a target, but the invention is not limited thereto. For example, the targets may also be a plurality of violations selected by a user, a violation automatically detected by a resource operation planning assistance apparatus, and the like.

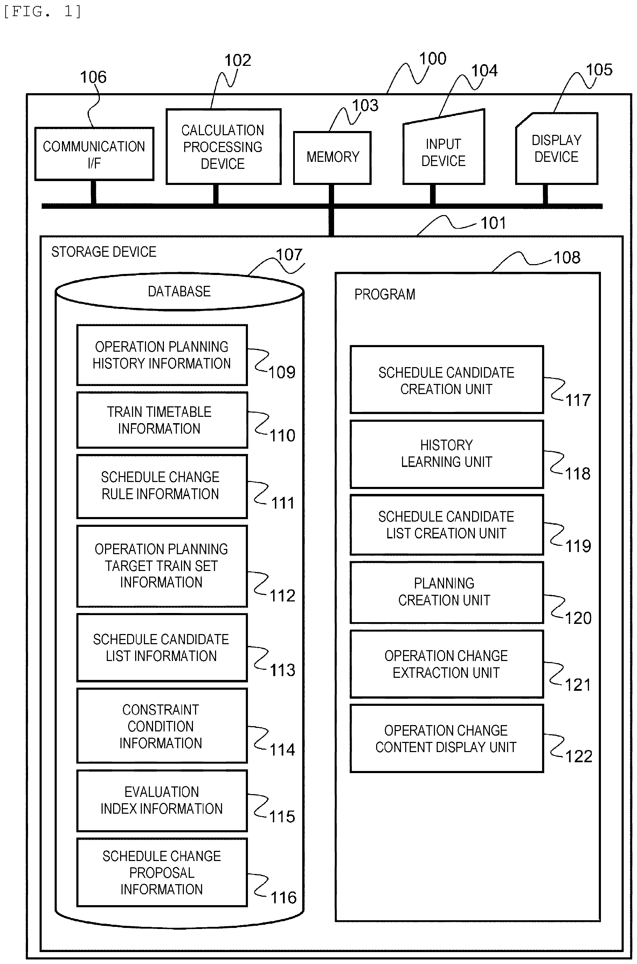

FIG. 1 is a diagram illustrating a system configuration of a resource operation planning assistance apparatus according to a first embodiment.

A resource operation planning assistance apparatus 100 includes a storage device 101, a calculation processing device 102, a memory 103, an input device 104, a display device 105, and a communication I/F 106.

The storage device 101 is constituted by an appropriate nonvolatile storage device such as a hard disk drive and includes a database 107 storing various data and a program 108. The calculation processing device 102 executes the program 108 stored in the storage device 101 by reading the program 108 into the memory 103, and performs general control of the device as well as various determinations, calculations, and control processes. The memory 103 is constituted by a volatile storage device such as a RAM. The input device 104 is an input device that receives key input or voice input from a user. The display device 105 is a display device that displays processing data, such as a display. The communication I/F 106 is a network interface device that controls communication with other devices via a network in accordance with a predetermined protocol.

The database 107 manages the various data and includes operation planning history information 109, train timetable information 110, schedule change rule information 111, operation planning target train set information 112, schedule candidate list information 113, constraint condition information 114, evaluation index information 115, and schedule change proposal information 116.

The program 108 describes processes executed by the calculation processing device 102 and includes a schedule candidate creation unit 117, a history learning unit 118, a schedule candidate list creation unit 119, a planning creation unit 120, an operation change extraction unit 121, and an operation change content display unit 122.

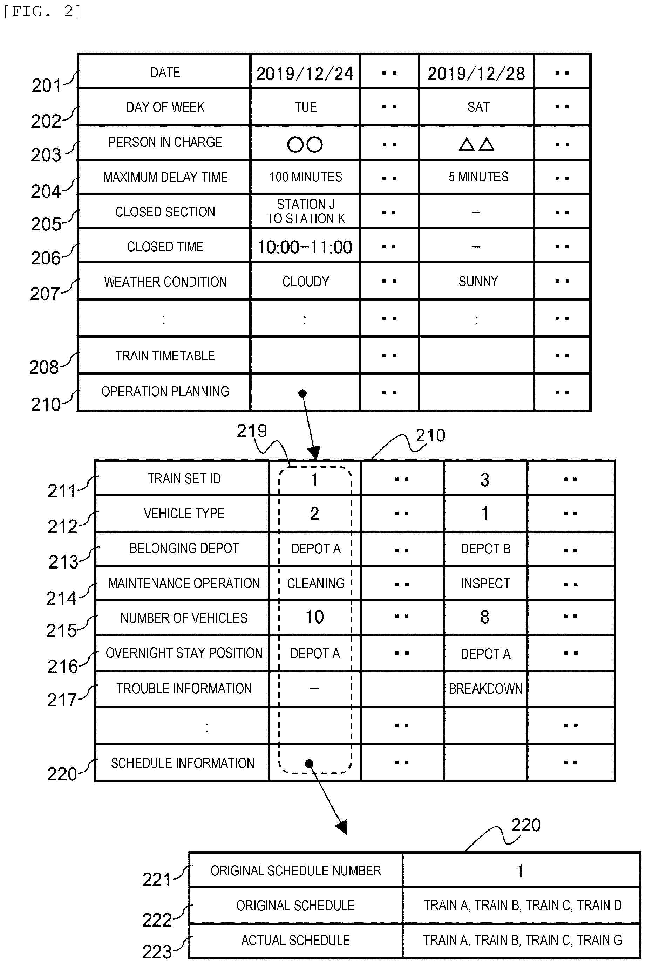

The operation planning history information 109 stores trouble information, the train timetable information 110, train set information, and schedule information on a daily basis as a past resource operation planning history. Details will be described later with reference to FIG. 2.

The train timetable information 110 defines an itinerary of a transport service for each minimum unit thereof. For example, a minimum unit in the transport service in a railway is a train, and a train having a train number is defined by stations where the train stops or passes from a starting station to an ending station, and an arrival time and departure time, or a passing time of each station. Among these times, a time before a current time is a result time, that is, a time at which an event actually occurs, and a time starting from the current time is a predicted time calculated from an original planning and the result time.

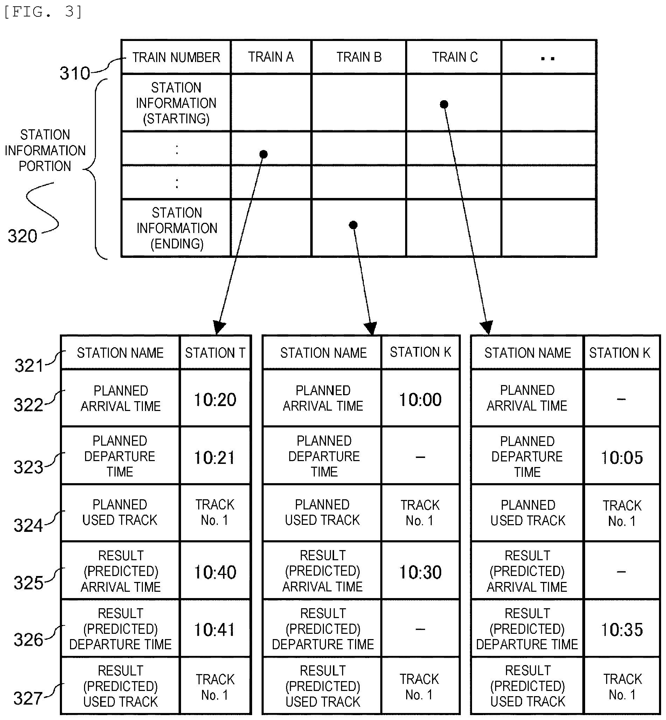

These times are updated as needed at timings set in an operation management system, transmitted from the operation management system via a network, and stored in the train timetable information 110 of the resource operation planning assistance apparatus 100. In the train timetable information 110, information on past days stored in the operation planning history information 109 and information on a planning target day are stored on a daily basis. Details will be described later with reference to FIG. 3.

The schedule change rule information 111 is schedule change rule information generated by the history learning unit 118 and stores a classification definition, a learner, a relaxable constraint condition, and a target day for each classification. The classification definition stores items of the operation planning history information 109 when the operation planning history information 109 is to be classified, for example, conditions such as a day of week 202, a person in charge 203, and a maximum delay time 204. The relaxable constraint condition stores a relaxable constraint condition among constraint conditions included in the constraint condition information 114. The target day stores a value of a date 201 in the operation planning history information 109, which represents a day to be referred to when the learner is to be generated.

The operation planning target train set information 112 stores information on a planning target train set on the planning target day. Details will be described later with reference to FIG. 2.

In the schedule candidate list information 113, possible schedule candidates are stored together with adoption rates for each train set on the planning target day. In addition, the schedule candidate list information 113 also stores operation plans generated for respective schedule candidates in an operation planning creation process by the planning creation unit 120, a calculation result of an evaluation index, and an operation planning change and a train timetable change extracted by the operation change extraction unit 121.

The constraint condition information 114 stores various constraint conditions to be considered in an operation planning creation process by the planning creation unit 120.

The evaluation index information 115 stores input contents by a user of designation of evaluation indices to be displayed together with the operation change proposal displayed by the operation change content display unit 122, and of evaluation indices to be considered in the operation planning creation process by the planning creation unit 120 and weights thereof.

In the constraint condition information 114 and the evaluation index information 115, possible constraint conditions and the evaluation indices may be stored in advance or may be updated as needed. In addition, input of conditions and indices to be considered may be accepted from the user.

The schedule change proposal information 116 stores the operation planning change and the train timetable change extracted by the operation change extraction unit 121 from the operation planning proposals created by the operation planning creation process of the planning creation unit 120.

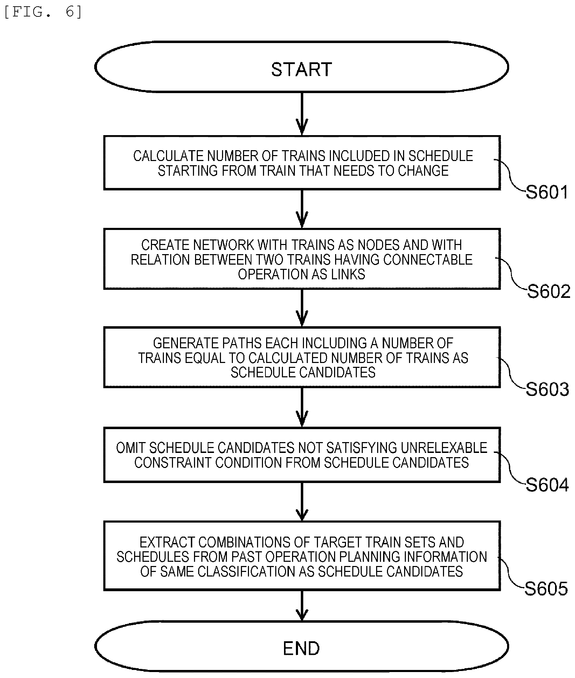

The schedule candidate creation unit 117 is a process of enumerating possible schedule candidates of a target train set in the history learning unit 118 or the schedule candidate list creation unit 119. Details will be described later with reference to FIG. 6.

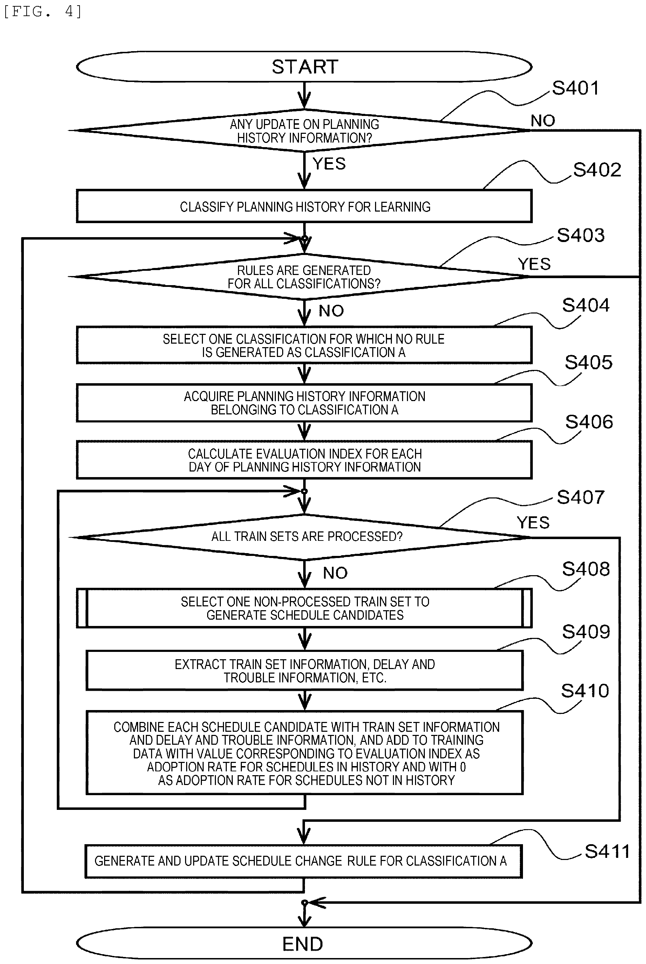

The history learning unit 118 is a process of learning a schedule tendency with respect to the train set, the trouble information, and the train timetable information from the operation planning history information 109 and creating the schedule change rule information 111. Details will be described later with reference to FIG. 4.

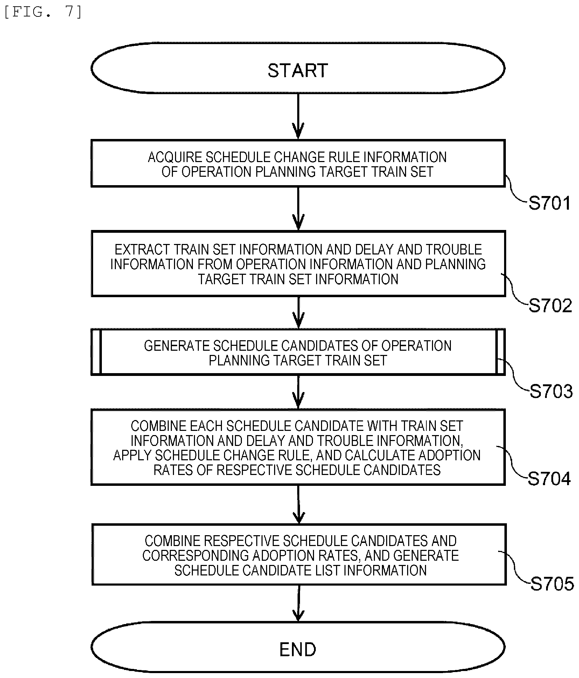

The schedule candidate list creation unit 119 is a process of using the schedule change rule information 111 to calculate adoption rates of the respective schedule candidates, which are calculated by the schedule candidate creation unit 117 with respect to the planning target train set on the planning target day, and creating the schedule candidate list information 113. Details will be described later with reference to FIG. 7.

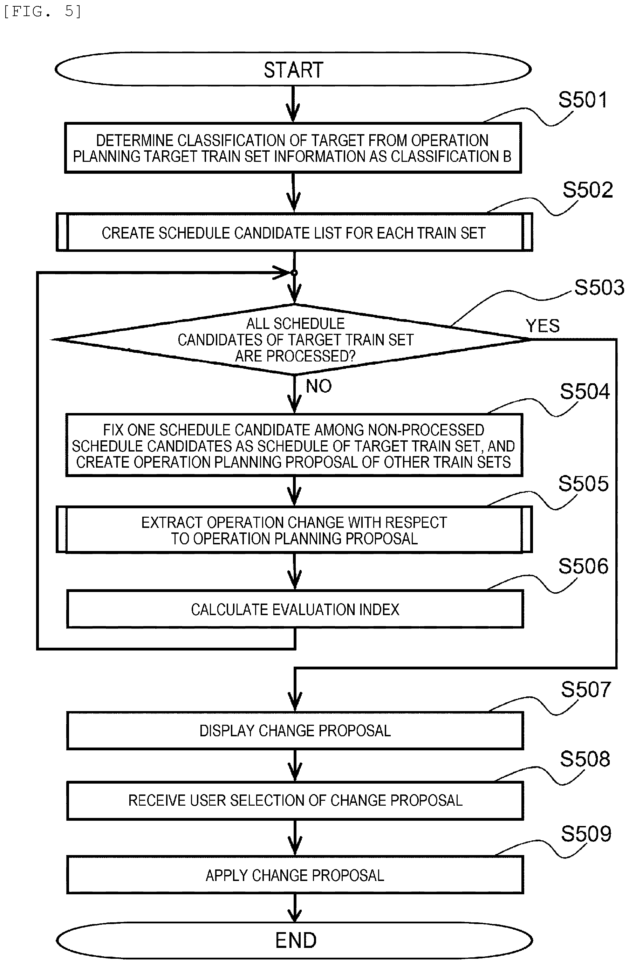

The planning creation unit 120 is a process of creating the operation planning proposals in combination with schedules of the respective train sets stored in the schedule candidate list information 113 and calculating the evaluation indices. Details will be described later with reference to FIG. 5.

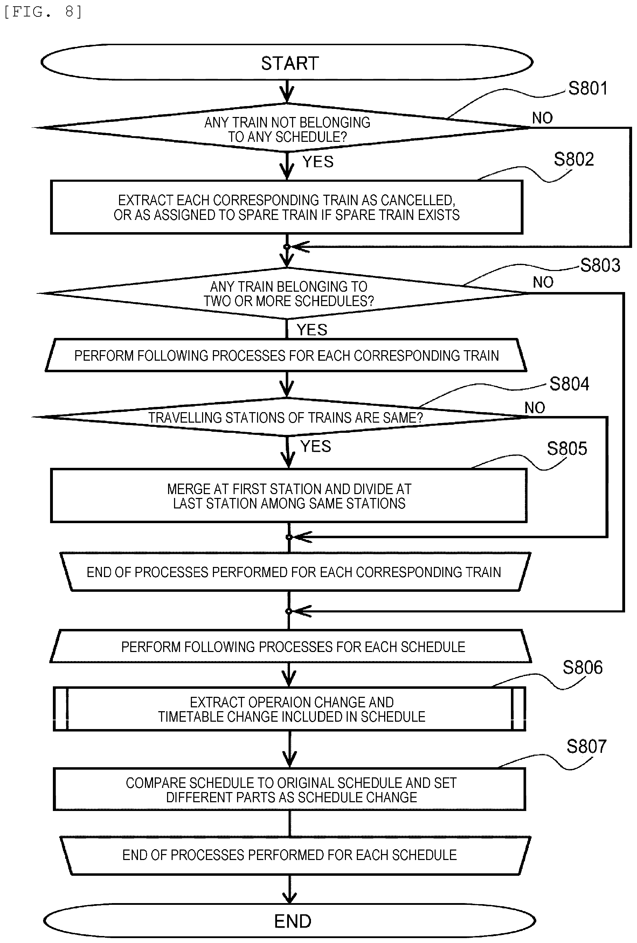

The operation change extraction unit 121 is a process of extracting the operation planning change and the train timetable change from the operation planning proposal created by the operation planning creation process of the planning creation unit 120. Details will be described later with reference to FIG. 8.

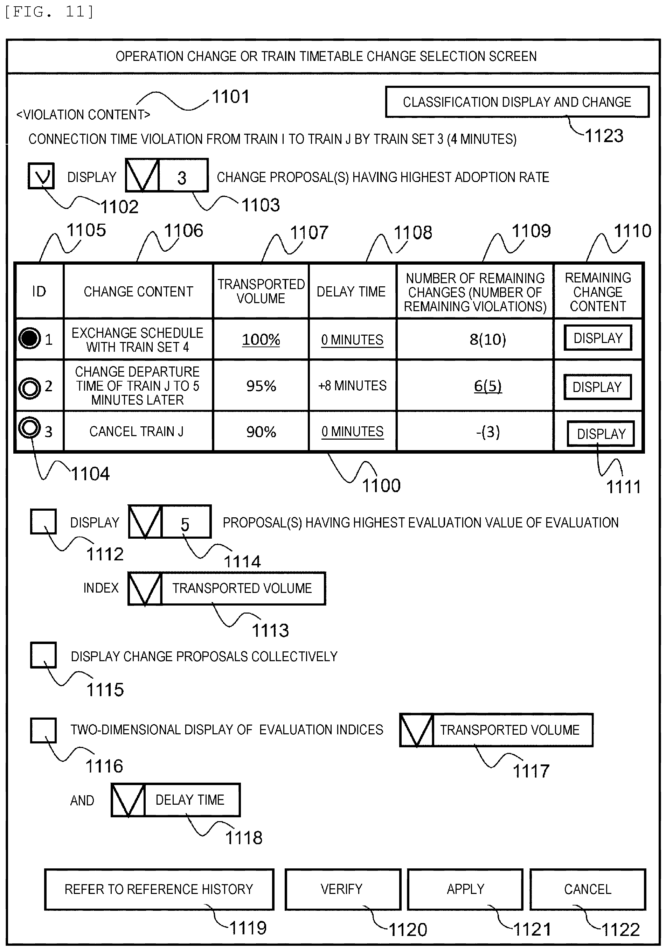

The operation change content display unit 122 is a process of displaying contents of the operation planning change and the train timetable change extracted by the operation change extraction unit 121. Details will be described later with reference to FIG. 11.

FIG. 2 is a diagram illustrating an example of the operation planning history information 109. FIG. 2 is a diagram illustrating a configuration of a table listing the trouble information, the train timetable information 110, the train set information 219, and schedule information 220 on a daily basis as the past resource operation planning history. This table is a table for managing history information on each day as one record. Items in the record include the date 201, the day of week 202, the person in charge 203, the maximum delay time 204, a closed section 205, a closed time 206, a weather condition 207, a train timetable 208, an operation planning 210, and the like. The items are not limited thereto, and may include a maximum temperature, a precipitation amount, a snow accumulation amount, and the like in addition to a weather as the weather condition (data of a resource operation planning on the current day is also added to this table in sequence).

The date 201 is a date indicating the time of the history information. The day of week 202 is a day of week of the day indicated by the date 201, and may be described as weekdays and holidays when a classification of the train timetable or the operation is classified by weekdays or holidays. The person in charge 203 is an ID or a name that uniquely represents a person in charge of the operation planning change on the day indicated by the date 201. When a tendency of the operation planning change varies by a person in charge, the person in charge 203 is used for classification. The maximum delay time 204 is a delay time at a station of a train having the largest delay in a train schedule disorder on the day indicated by the date 201. The closed section 205 is a section that is closed when a cause of necessity of the operation change is an accident or the like. The closed time 206 is a time at which the section indicated by the closed section 205 is closed. The weather condition 207 is a main weather of the day.

The train timetable 208 is the train timetable information 110 on the day indicated by the date 201, and details will be described later with reference to FIG. 3. The operation planning 210 is the train set information or operation planning information on the day indicated by the date 201.

The operation planning 210 is a table that manages each train set 219 as one record, and includes a train set ID 211, a vehicle type 212, a belonging depot 213, a maintenance operation 214, the number of vehicles 215, an overnight stay position 216, trouble information 217, schedule information 220, and the like as items in the record. The train set ID 211 is an ID that uniquely represents the train set. The vehicle type 212 is an ID that represents the type of vehicles constituting the train set. The belonging depot 213 is a depot to which the train set belongs. The maintenance operation 214 is an operation performed in a depot yard scheduled for the train set on the day indicated by the date 201. The number of vehicles 215 is the number of vehicles constituting the train set. The overnight stay position 216 is a final arrival place of the train set on the day indicated by the date 201. The trouble information 217 is information on trouble that has occurred in the train set, such as a vehicle breakdown. The schedule information 220 is information on a schedule taken by the train set indicated by the train set ID 211 on the day indicated by the date 201.

The schedule information 220 includes an original schedule number 221, an original schedule 222, and an actual schedule 223. The original schedule number 221 is a number that identifies a schedule in which the train set indicated by the train set ID 211 is assigned on the date 201. The original schedule 222 is a row of trains included in the schedule indicated by the original schedule number 221. (The schedule represents a series of a train group assigned to one train set. An original schedule of a train set on 2019/12/24 (ID = 1) is a planning operated as a train A, a train B, a train C, and a train D. Here, a train refers to an operation from a starting station to an ending station.) The actual schedule 223 is a row of trains in which the train set indicated by the train set ID 211 is actually assigned on the date 201.

The operation planning target train set information 112 is information on the planning target train set on the planning target day, and has the same table configuration as the operation planning history information illustrated in FIG. 2. However, the operation planning target train set information 112 has records on the planning target day alone and the actual schedule 223 is calculated by the planning creation unit 120, and thus trains that are actually assigned and have already travelled are stored alone before the planning.

FIG. 3 is a diagram illustrating an example of the train timetable information 110. The train timetable 208 in the operation planning history information 109 is also stored in the same format. In the train timetable information 110, each train is managed as one record. Items in the record include a station information portion 320 and a train number 310 that represents a name of the train.

In the station information portion 320, a data table that represents travelling information such as an arrival time, a departure time, and a used track in each station of the train is stored for each travelling station. As for the travelling information, information for each station where the train indicated by the train number 310 is travelling is managed as one record, and the station information is stored in an order of travelling. Items in the record include a station name 321, a planned arrival time 322, a planned departure time 323, a planned used track 324, a result (predicted) arrival time 325, a result (predicted) departure time 326, and a result (predicted) used track 327.

The station name 321 is a name of the travelling station. The planned arrival time 322, the planned departure time 323, and the planned used track 324 represent an arrival time, a departure time, and a used track at the time of planning at the station indicated by the station name 321 of the train indicated by the train number 310. The result (predicted) arrival time 325, the result (predicted) departure time 326, and the result (predicted) used track 327 represent a result or predicted arrival time, a result or predicted departure time, and a result or predicted used track at the station indicated by the station name 321 of the train indicated by the train number 310.

The result is a past operation result time or track stored in the train timetable 208 of the operation planning history information 109 and the train timetable information 110 indicating a train that has travelled before a planning creation time on the planning target day. The term "predicted" means a future time, a future operation prediction starting from the planning creation time on the planning target day, and a time or a track calculated as needed by a train timetable prediction calculation algorithm based on a generally known mathematical model.

When the train passes a station, the planned arrival time 322 and the result (predicted) arrival time 325 store "-". The planned arrival time 322 and the result (predicted) arrival time 325 of the starting station and the planned departure time 323 and the result (predicted) departure time 326 of the ending station also store "-". In a case of partially cancelled operation, the result (predicted) arrival time 325, the result (predicted) departure time 326, and the result (predicted) used track 327 of a station where the train does not travel also store "-". In the case of lengthening of run, the planned arrival time 322, the planned departure time 323, and the planned used track 324 of a station where the train newly travels also store "-".

For example, in the railway business, a train traffic rescheduling system provided with an operation planning creation system and a train timetable command system has been in operation. In the operation planning creation system, operation planning information on each day is created and then distributed to the resource operation planning assistance apparatus 100 in advance via a network. In the resource operation planning assistance apparatus 100, the operation planning information is stored in the operation planning 210 on the current day of the operation planning history information 109.

In the train timetable command system, the train timetable information on each day is created and then distributed to the resource operation planning assistance apparatus 100 in advance via a network. In the resource operation planning assistance apparatus 100, the train timetable information is stored in the train timetable information 110 and the train timetable 208 of the current day of the operation planning history information 109. When an event occurs on the current day and a delay occurs in the train, the train timetable command system sends the predicted time or the result time of the current day as appropriate to update the result (predicted) arrival time 325 and the result (predicted) departure time 326 of the train timetable 208 as appropriate.

The resource operation planning assistance apparatus 100 presents "violation" to the user when it is determined that a delay occurs in the train timetable due to a vehicle breakdown, an accident, or the like and the operation cannot be performed according to the operation plans and the train timetable. The resource operation planning assistance apparatus 100, in accordance with a user instruction, presents the train timetable change and the schedule change proposal of the train set having the violation to receive an instruction for verification and application by the user.

The resource operation planning assistance apparatus 100 according to the present embodiment records a history in which a vehicle breakdown, an accident, or the like occurs and the train timetable change, the schedule change of the train set, and the like are performed to the maximum delay time 204, the closed section 205, the trouble information 217, and the actual schedule 223 on the current day in the operation planning history information 109 (operation planning change record). The history learning unit 118 constitutes a learner that uses the past operation planning history information in which the schedule change is performed among data recorded in the operation planning history information 109 as learning data, so as to learn which of the plurality of schedule change candidates has a high adoption rate.

When an event that causes a train timetable delay occurs, the resource operation planning assistance apparatus 100 of the present embodiment can apply the learner when the schedule candidates of operation planning target train set are created, so as to calculate the adoption rates of the respective schedule candidates, and to present operation planning change proposals to the user in a priority order based on the adoption rate.

FIG. 4 is a flowchart illustrating a processing procedure example of the history learning unit 118.

The history learning unit 118 generates and updates the learner recorded in the schedule change rule information 111 on the current day (or week, month, or the like) when the operation planning history information 109 is updated (operation planning change record). The learner is generated for each classification represented by a single item or a combination of a plurality of items in the operation planning history information 109.

The history learning unit 118 creates the learner by the learning data that uses, as target variables, for example, the train set information on the operation planning target train set, the trouble information, and the schedule candidates are used as input feature values and the adoption rates of the corresponding schedule candidates.

Step S401 is a process of checking whether an update (operation planning change record) exists in the operation planning history information 109, that is, whether a correction or an update on information (operation planning change record) exists. When an update exists, the process proceeds to step S402. When no update exists, the process of the history learning unit 118 is ended since no learning target exists.

Step S402 is a process of classifying days on which an update or an addition exists in the operation planning history information 109.

The classification is performed by using the items such as the day of week 202, the person in charge 203, the maximum delay time 204, the closed section 205, the weather condition 207, and the like individually or in combination. Alternatively, the classification may be performed using a similarity degree of the train timetable 208, such as days having a larger number of the same travelling trains. The classification may be created using a single item or a combination of the items. Each day does not necessarily belong to a single classification, but may belong to a plurality of classifications. The classification is performed and the date is added to a target day of the record of the corresponding classification of the schedule change rule information 111. In the following steps, the schedule change rule information 111 is created and updated for each classification.

Step S403 is a process of checking whether the schedule change rule is generated for all the classifications, that is, whether the learner or the relaxable constraint condition of the schedule change rule information 111 of any classification is not updated among the classifications including the day on which the update or the addition exists in the operation planning history information 109 (all the classifications classified in step S402). When the schedule change rule is generated for all the classifications, the process of the history learning unit 118 is ended. When the schedule change rule is not generated for any classification, the process proceeds to step S404.

Step S404 is a process of acquiring, as a classification A, a classification for which the learner of the schedule change rule information 111 is not updated or generated among the classifications including the days on which the update or the addition exists in the operation planning history information 109.

Step S405 is a process of acquiring planning history information belonging to the classification A. This step is a process of extracting, from the operation planning history information 109, planning history information corresponding to the dates in which the schedule change rule information 111 stores the target days of the record indicating the classification A.

Step S406 is a process of calculating predetermined evaluation indices for each day of the planning history information extracted in step S405 on the target days of the classification A. Each predetermined evaluation index is an evaluation index considered when evaluating the operation change proposal, such as a final overnight stay position compliance percentage and a delay increase time. The predetermined evaluation index is calculated in order to reflect quality of the evaluation index in the learner generation when different schedules are to be taken for the same train set information and delay and trouble information.

Step S407 is a process of checking whether learning data for creating the learner is created for all train sets on all days of the planning history information among the target days of the classification A extracted in step S405. When the target days of the classification A includes a day on which a spare train set is used, the spare train set is also to be checked. When the learning data is created for all the train sets, the process proceeds to step S411. When learning data is not created for any train set, the process proceeds to step S408.

Step S408 is a process of selecting one train set among the train sets for which the learning data for creating the learner is not created, and generating schedule candidates that can be taken by the selected train set. Details of a schedule candidate generation process will be described later with reference to FIG. 6.

Step S409 is a process of extracting train set information, delay and trouble information, and the like for the train set selected in step S408 from the operation planning history information 109. Specifically, values of the respective items included in the operation planning history information 109 are extracted, except for items whose values are the same for all the train sets belonging to the classification A, such as the items used in classifying to the classification A.

In step S410, with respect to the train set selected in step S408, each schedule candidate generated in step S408 is added to the learning data for creating the learner in combination with the train set information and the delay and trouble information extracted in step S409, with a value corresponding to the evaluation indices as an adoption rate of each schedule in history, that is, each schedule shown in the actual schedule 223, and with 0 as adoption rates of the other schedules, respectively. The value corresponding to the evaluation indices is determined by the following steps.

First, the adoption rate is set to 1 when no train set data has the same train set information and delay and trouble information among the learning data created so far. Alternatively, schedules actually taken are compared with each other when any train set data has the same train set information and delay and trouble information. When the schedules actually taken are all the same schedule, the adoption rates are all set to 1. When different schedules exist in the schedules actually taken, each adoption rate is set to a value greater than 0 and less than 1 in accordance with magnitudes of the respective evaluation indices calculated in step S406. The train sets having the same train set information and delay and trouble information are set with the same value of the adoption rate. With respect to the train sets having different schedules, the value of the adoption rate is set to 1 with respect to a train set having a largest (best) value of the evaluation index, and with respect to the other train sets, for example, when a larger value indicates a better evaluation index, the value of the evaluation index of this train set is divided by the value of the evaluation index of the best train set.

After the addition to the learning data, this process returns to step S407 and repeats the processes of step S408 to step S410 until the process is ended for all the train sets on all the days of the planning history information among the target days of the classification A.

Step S411 is a process of generating and updating a schedule change rule for the classification A and updating the schedule change rule information 111, on the basis of the learning data created in the processes so far. Specifically, the learner and the relaxable constraint condition of the schedule change rule information 111 are updated.

In the present embodiment, the learner is not limited to a specific type of learners, and may use machine learning or use a predetermined classification rule, statistical processing, or the like. For example, when a neural network is used as the learner, a graph structure and a weight of each side may be stored. When a decision tree is used as the learner, a tree structure and a classification rule (if-then rule) at the time of branching into each branch may be stored. Since a format differs depending on the type of the learner, no unified format is presented here.

The relaxable constraint condition checks whether each constraint condition indicated in the constraint condition information 114 is satisfied in the operation planning history information 109 of the target days of the classification A, extracts conditions that are not satisfied, that is, conditions whose constraint is relaxed, and stores the conditions to the relaxable constraint condition of the schedule change rule information 111.

Step S404 to step S411 are repeated until no classifications including the days on which update or the addition exists in the operation planning history information 109 include non-updated learner or relaxable constraint condition of the schedule change rule information 111.

FIG. 5 is a flowchart illustrating a processing procedure example of the planning creation unit 120.

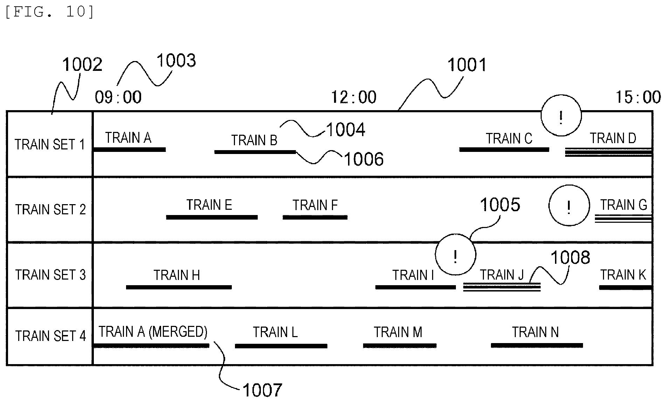

When a delay occurs in an operation timetable of a railway due to occurrence of a vehicle breakdown, an accident, or the like, the resource operation planning assistance apparatus 100 receives delay information and the like from a site or the like, and then displays a graph of the original schedule 222, which is the operation planning of each train set on the current day, on a screen for a user, and issues a warning by displaying a violation mark at a target location on the graph where the operation becomes impossible, such as an insufficient operation connection time between trains or an operation connection station violation, due to a delay of the operation timetable on the screen (described later in FIG. 10). An example of a flow of processes to be performed when the user views the display screen, issues an instruction to select a violation to be solved from the input device 104 of the resource operation planning assistance apparatus 100, and performs an input is illustrated. The following is a process of presenting a schedule change proposal for a train set having the selected violation.

Step S501 is a process of using the operation planning target train set information 112 (information on the selected planning target train set by the user) to determine a classification of the target as a classification B. The classification is determined with reference to the classification definition of the schedule change rule information 111 and in comparison to the train set information, the trouble information, and the train timetable information on the operation planning target train set information 112. When no matching classification exists, the closest classification is selected. When a plurality of applicable classifications exist, a classification having the strongest condition may be selected, or all of the classifications may be selected and the current and subsequent processes may be performed on each classification to create the schedule change proposal. In this step, the selected classification is set as the classification B.

Step S502 is a process of generating the schedule candidate list information 113 with reference to the operation planning target train set information 112 for each train set to be planned, that is, each train set whose schedule includes trains to travel starting from the current time on the schedule. Details of a schedule candidate list generation process will be described later with reference to FIG. 7. In this step, the schedule candidates are generated together with the adoption rates with respect to each train set to be planned.

Step S503 is a process of checking whether all the schedule candidates stored in the schedule candidate list are applied to generate the operation planning proposal for the train set having the selected violation. When all the schedule candidates are applied to create the operation planning proposal and the evaluation indices are calculated, the process proceeds to step S507. When any schedule candidate is not applied, the process proceeds to step S504.

Step S504 is a process of selecting one schedule candidate that is not applied to create the operation planning proposal, fixing this schedule candidate as the schedule of the train set having the selected violation, and creating an operation planning of each other train set. The operation planning proposal may be created using related art of, with respect to each train set having trains to travel starting from the current time on the schedule, applying schedule candidates from a schedule candidate having the highest adoption rate in the schedule candidate list, and calculating an operation planning proposal satisfying conditions other than relaxable constraint conditions of the record indicating the classification B of the schedule change rule information 111 among the constraint conditions defined in the constraint condition information 114. Alternatively, the operation planning proposal may be created by standardizing in forms of rules in advance and selecting a rule (or pattern) according to a situation.

Step S505 is a process of extracting the train timetable change or the operation change by the operation change extraction unit 121 with respect to the operation planning proposal generated in step S504. Details of this process will be described later with reference to FIG. 8.

Step S506 calculates the values of the respective evaluation indices stored in the evaluation index information 115 for the operation planning proposal generated in step S504 and the train timetable change and the operation change extracted in step S505. For example, the number of cancelled trains, the number of train sets necessary for the operation change, and the number of final overnight stay position violations are calculated.

With respect to the train set having the selected violation, step S504 to step S506 are performed for all the schedule candidates stored in the schedule candidate list, and then the process proceeds to step S507.

Step S507 is a process of displaying the operation change proposals on the display device 105 by the operation change content display unit 122. A display example is illustrated in FIG. 11. Details will be described later.

Step S508 is a process of receiving a user selection of a change proposal. The user selects a change to be applied with reference to displayed evaluation values from the operation change proposals or the train timetable change displayed in step S507. Subsequently, in step S509, the change proposal selected by the user is applied to the operation planning. The applied change is fixed when an operation planning proposal for another train set is to be generated later. Thereafter, this process is ended.

FIG. 6 is a flowchart illustrating a processing procedure example of the schedule candidate creation unit 117.

Step S601 calculates the number of trains included in the schedule starting from the train that needs to change. As a calculation method, for example, data having, on the original schedule 222, the same trains as the original schedule 222 of the schedule candidate creation target train set in the operation planning target train set information 112 may be extracted from the operation planning history information 109, so as to calculate the total number of trains that can be assumed. Alternatively, an average value of the number of trains may be calculated. The number of trains may also be calculated using machine learning or the like.

Step S602 is a process of creating a network with trains included in the train timetable 208 of the operation planning history information 109 as for step S408, or of the operation planning target train set information 112 as for step S703, as nodes, and with relation between two trains having connectable operations as links.

When a way station becomes an ending station or a starting station, such as in a case where the closed section 205 is set and the result (predicted) departure time 326 and the result (predicted) arrival time 325 of a way station among travelling stations stored in the station information portion 320 of one train number 310 are set as "-", a plurality of nodes are set for the same train number with each node set for continuous travelling from a starting station to an ending station.

The term "connectable operation" means that when an ending station of a train A and a starting station of a train B are the same and an operation connection time between the ending station arrival time of the train A and the starting station departure time of the train B can be ensured with reference to the result (predicted) departure time 326 of the starting station and the result (predicted) arrival time 325 of the ending station, it is regarded that a connectable operation exists from the train A to the train B, and a link directed from a node of the train A to a node of the train B is set. Even if the connection stations are different or the connection time cannot be ensured, a link is set with reference to the operation planning history information 109 between trains connected in operation in the actual schedule 223 among the target days of the corresponding classification of the schedule change rule information 111.

Step S603 uses the network generated in step S602 to enumerate paths each including a number of nodes equal to the number of trains calculated in step S601 starting from a node of a train assigned before the train that needs to change of the schedule candidate creation target train set, and takes a row of the trains included in each path as a schedule candidate. The paths are enumerated using, for example, a generally known algorithm such as depth-first search.

Step S604 is a process of omitting candidates that do not satisfy unrelexable constraint conditions from the schedule candidates extracted in step S603. Specifically, with reference to the relaxable constraint conditions in the record of the classifications of the schedule candidate creation target train set in the schedule change rule information 111, it is checked whether constraint conditions other than the relaxable constraint conditions of the constraint condition information 114 are satisfied, and schedule candidates that do not satisfy the constraint conditions are excluded from the candidates.

Step S605 is a process of extracting combinations of target train sets and schedules from past operation planning information on the same classification as the schedule candidate creation target train set as the schedule candidates. The same classification is the classification A in the case of the schedule candidate generation process in the history learning unit 118 and the classification B in the case of the schedule candidate list generation process in the planning creation unit 120. The past operation planning information is data of a day stored in the target day in the corresponding classification of the schedule change rule information 111 in the operation planning history information 109. The operation planning 210 is extracted from the past operation planning information, and the actual schedule 223 of each train set whose original schedule 222 is the same as the schedule candidate creation target train set is extracted and added to a set of the schedule candidates remaining as a result of step S604. Even if a schedule that does not satisfy the constraint conditions exists in the past planning, the schedule in the history remains as a candidate as it is.

The schedule candidates remaining as the result of step S604 and the schedule candidates extracted in step S605 are used as output of the schedule candidate creation unit 117.

FIG. 7 is a flowchart illustrating a processing procedure example of the schedule candidate list creation unit 119.

Step S701 is a process of acquiring the schedule change rule information 111 of the operation planning target train set. Specifically, the record corresponding to the classification B determined in step S501 is extracted from the schedule change rule information 111.

Step S702 is a process of extracting the train set information and the delay and trouble information for a train set as a schedule candidate list creation target on the basis of operation information and planning target train set information. Specifically, values are extracted from the operation planning target train set information 112 for the items used when generating the learner of the classification B in the schedule change rule information 111 (items extracted in step S409), such as the items used when classifying into the classification B.

Step S703 is a process of generating the schedule candidates of the operation planning target train set by the schedule candidate generation unit 117. Details of this process will be described later with reference to FIG. 6.

Step S704 is a process of combining each schedule candidate generated in step S703 with the train set information and the delay and trouble information extracted in step S702, applying the learner of the classification B in the schedule change rule information 111, and calculating the adoption rates for the respective schedule candidates.

Step S705 is a process of combining the respective schedule candidates and the adoption rates calculated in step S704 and storing the combination in the schedule candidate list information 113.

FIG. 8 is a flowchart illustrating a processing procedure example of the operation change extraction unit 121, and is a flowchart of a process of extracting the operation change or the train timetable change from the operation planning proposal created by the planning creation unit 120. Among operation changes and train timetable changes to be extracted below, those that have been decided before the planning creation unit 120 generates the operation planning proposal will not be extracted as changes.

Step S801 is a process of checking whether any train among trains existing in the train timetable information 110 on the planning target day does not belong to any schedule of the train set. When such a train exists, the process proceeds to step S802, and for each of the corresponding trains, "cancelled" is extracted, or "assign to spare train" is extracted when a spare train exists and the corresponding train can be assigned to the spare train.

Next, step S803 is a process of checking whether any train belongs to schedules of a plurality of train sets. When a corresponding train exists, division and merge determination is performed on each corresponding train in processes of steps S804 and S805.

Step S804 checks whether any station is common among travelling stations of the train included in schedules of a plurality of train sets. Specifically, with reference to the station information portion 320 of the train timetable information 110, it is checked whether there is travelling information on any trains having the same train number and the same stations among the trains assigned to schedules having the corresponding train. When the station information portion 320 includes such travelling information, the process proceeds to step S805, and "merge at first station" and "divide at last station" among the same travelling stations is extracted.

A case where no stations are common among the travelling stations of the trains included in schedules of a plurality of train sets in step S804 is, for example, a case where the closed section 205 is set and the trains are scheduled to travel before and after the closed section by the same train number.

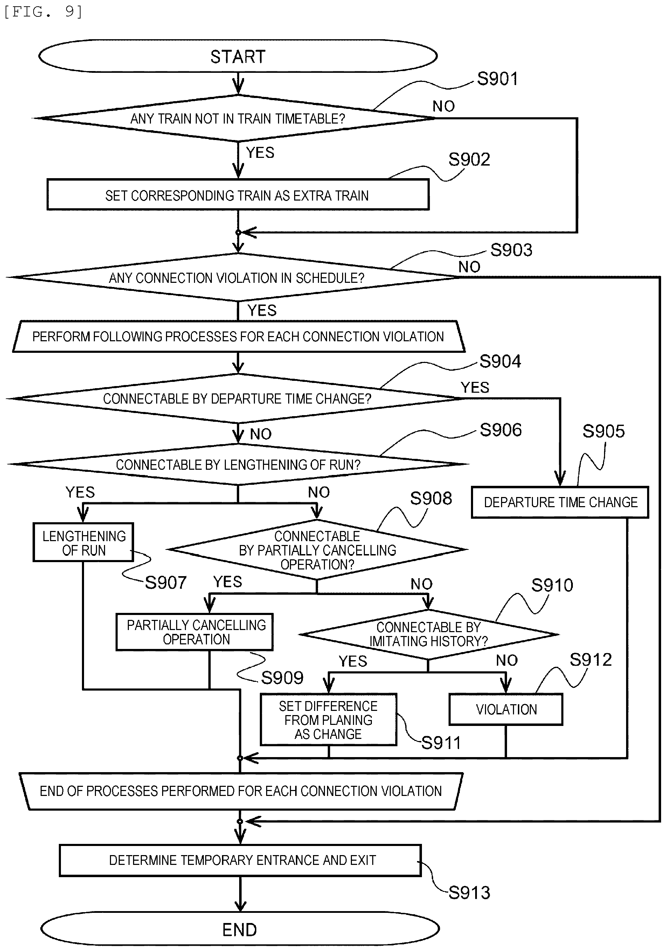

Step S806 is a process of extracting, for each schedule of the train sets included in the operation planning proposal created by the planning creation unit 120, the operation change and the train timetable change included in the schedule. Details will be described later with reference to FIG. 9.

Step S807 is a process of comparing the schedules of the created operation planning proposal to the original schedule 222 and extracting different parts as the schedule change. After the processes of steps S806 and S807 are executed on the schedules of all the train sets, the process by the operation change extraction unit 121 is ended.

FIG. 9 is a flowchart illustrating a processing procedure example of step S806 in FIG. 8, which is the process of extracting the operation change and the train timetable change included in the schedule. Among operation changes and train timetable changes to be extracted below, those that have been decided before the planning creation unit 120 generates the operation planning proposals will not be extracted as changes either.

Step S901 is a process of checking whether any train that is not in the train timetable 208 is included in the trains included in the schedule. When such a train exists, the process proceeds to step S902, and the corresponding train is extracted as "set as extra train".

Step S903 is a process of checking whether any connection violation exists in connections between the trains in the schedule. That is, with reference to the train timetable information 110, it is checked, for each connection between the trains in the schedule, whether an ending station of a connection source train and a starting station of a connection destination train are different from each other, and whether the connection time can be ensured even the two stations are the same (whether there is time for forwarding the corresponding train set from the ending station to the starting station when the two stations are different). When any connection violation exists, step S904 and subsequent steps are executed for each connection violation. When no connection violation exists in the schedule, the process proceeds to step S913. A case where merge and divide are extracted for a way station of the train in step S805 and operation connection is established at the way station is not to be determined as operation connection violation in this step.

In step S904, when a target connection is subject to connection time violation but can become connectable by postponing departure from the starting station of the connection destination train within a range shorter than a predetermined time, the process proceeds to step S905, and "prepone departure time", i.e., preponing the departure time from the starting station of the connection destination train by a minimum time, is extracted as timetable change.

When the connection violation cannot be solved by the departure time change, the process proceeds to step S906. Step S906 is a process of checking whether the target connection can become connectable by lengthening of run. The term connectable by lengthening of run means that the starting station of the connection destination train is ahead of the ending station of the connection source train and the connection time can be ensured by lengthening the travelling such that the ending station of the connection source train becomes the starting station of the connection destination train, providing that a connection track exists without including any closed section. Alternatively, the term connectable by lengthening of run means that the ending station of the connection source train exists ahead of the starting station of the connection destination train, and the connection time can be ensured by lengthening the travelling with the starting station of the connection destination train as the ending station of the connection source train, providing that a connection track exists without including any closed section. When the target connection can become connectable by lengthening of run, the process proceeds to step S907, and "lengthen run of connection source train to starting station of connection destination train" or "lengthen run of connection destination train to ending station of connection source train" is extracted as the train timetable changes.

When the target connection cannot become connectable by lengthening of run, the process proceeds to step S908 and checks whether the target connection can become connectable by partially cancelling operation. The term connectable by partially cancelling operation means that the connection time can be ensured by partially cancelling one or both of the connection source train and the connection destination train, providing that a connection track exists. Here, partially cancelling operation is limited to cancellation up to connectable trains and partial cancellation of the minimum number of stations for connectable operation. When the target connection can become connectable by partially cancelling operation, the process proceeds to step S909 and "partially cancelling operation" is extracted. When the target connection cannot become connectable by partially cancelling operation, the process proceeds to step S910.

Step S910 is a process of checking whether the target connection can become connectable by imitating the history. The term connectable by imitating the history is to check whether a connection exists between the same trains with reference to the actual schedule 223 of each train set on each day of the operation planning history information 109. When a connection exists between the same trains, the process proceeds to step S911, an operation change or a train timetable change that affects the train timetable least is adopted among the same connections in the history, and a difference from the train timetable 208 or the original schedule 222 on the current day is extracted as the change. When no connection exists between the same trains in the history, the process proceeds to step S912, and the target connection is regarded as an operation connection violation as it is.

In determination of steps S906, S908, and S910, as long as the target connection can become connectable with less influence by minimizing the changes such as lengthening of run or partially cancelling operation while preponing the starting station departure time of the connection destination train in a range shorter than a predetermined time, preponing of the departure time is also to be executed.

After the above processes are performed for all the operation connection violations, the process proceeds to step S913. Step S913 is a process of determining temporary entrance and exit. In a case where a target schedule is shorter as compared to the original schedule 222 and thus the train can enter a depot, a temporary entrance is extracted. When necessary for use of a spare vehicle or for the target schedule, a temporary exit is extracted. In either case, new entrance and new exit without being planned in the original schedule 222 are extracted as temporary entrance and temporary exit.

As described above, the operation change and the train timetable change included in the schedules are extracted.

FIG. 10 is a diagram illustrating a screen display example of the resource operation planning assistance apparatus 100 according to the present embodiment. The present embodiment is illustrated by a display method of representing the schedule by a cross bar with train sets as a vertical axis and the time as a horizontal axis, but may also be illustrated by a timetable diagram that represents the operation by connecting line segments representing the trains with the time as the horizontal axis and a distance as the vertical axis. This screen display example illustrates assignment of the trains to each train set. The assignment of the trains is created on the basis of the original schedule 222 on the planning target day and reflects a current operation status of the train timetable 208. This screen is represented by assignment information 1001, a train set name 1002, and a horizontal axis 1003. The horizontal axis 1003 represents the time. The train set name 1002 represents the train set ID 211 for uniquely identifying the train set. The assignment information 1001 represents the assignment of the trains to the train set illustrated in the train set name 1002. Each assigned train is represented by one cross bar (for example, a cross bar 1006), and the train number 310 (for example, a train name 1004) is displayed near the cross bar.

In an assignment upon merge, (merged) is added to the train name. For example, a symbol 1007 indicates that a train set 4 travels while being coupled to the train A of a train set 1. On this screen, a symbol 1005 is a violation mark illustrating a violation, and a symbol 1008 is a violation bar. The violation mark 1005 is a mark displayed for assignment that cannot be operated as planned, such as an operation connection time shortage or an operation connection station violation. The violation bar 1008 represents an assigned train having a violation. This screen is displayed on the display device 105 of the resource operation planning assistance apparatus 100, and when a user inputs for selecting a violation to be solved from the input device 104, for example, inputs a selection of the violation mark 1005 or the violation bar 1008, the process of FIG. 5 (planning creation unit 120) is performed.

FIG. 11 is a diagram illustrating a change proposal display example. FIG. 11 is a diagram illustrating an example of a display screen of the operation change or train timetable change proposal according to the present embodiment, and is a screen example for displaying a result in step S507 after the processes of step S501 to step S506 when an input for selecting a violation to be solved is made by the user from the input device 104 of the resource operation planning assistance apparatus 100.

A violation content 1101 is a content of the violation to be solved selected by the user. The present example shows a content of a violation "connection time violation from train I to train J in train set 3 (4 minutes)" when the violation mark 1005 illustrated in FIG. 10 is selected. This means that a schedule of a train set 3 requires four more minutes for operation connection from a train I to a train J.

A check box 1102 is a check box at which the user inputs a setting on whether to display, for a train set having the violation to be solved selected by the user, schedule candidates having highest adoption rates among the schedule candidates stored in the schedule candidate list information 113 as change proposals by a number designated in a combo box 1103. When the check box 1102 is checked, change proposals for the violation content 1101 are extracted by the designated number starting from a change proposal having a highest adoption rate with reference to the schedule candidate list information 113, and are displayed together with values of the evaluation indices as in a table 1100.

Items in the table 1100 include an ID 1105 that is a change proposal ID, and displays an ID and a radio button 1104 for selection of each change proposal. A change content 1106 shows contents of the operation change or train timetable change proposal for the selected violation. For example, a "change content" of a change proposal whose "ID" is "1" is "exchange schedule with train set 4", a "change content" of a change proposal whose "ID" is "2" is "change departure time of train J to 5 minutes later", and a "change content" of a change proposal whose "ID" is "3" is "cancel train J".

The items of the table 1100 include a transported volume 1107 and a delay time 1108, which are examples of the evaluation indices, and display the indices stored in the evaluation index information 115. The transported volume 1107 and the delay time 1108 in the present example display a transported volume and a delay time obtained by executing the change content 1106, and then creating plans of the other train sets by the planning creation unit 120 in step S504 and performing calculation in step S506. The transported volume indicates a magnitude of increase or decrease in a total transported volume after application of the operation planning proposal created by the planning creation unit 120 in step S504 with respect to a total transported volume before the application. The transported volume is calculated by a value obtained by multiplying a passenger capacity of the train set by a mileage. The delay time indicates a magnitude of increase or decrease in a total delay time before and after the application of the operation planning proposal created by the planning creation unit 120 in step S504. An underline of a numerical value indicates that this value is optimal as compared to those of the other change proposals.

The items of the table 1100 include the number of remaining changes 1109 that shows the required number of remaining operation changes after the change content 1106 is executed. For this value, the total number of the operation changes or the train timetable changes extracted by the planning creation unit 120 in step S505 is used. The number of remaining violations after the application of the change proposal is shown in parentheses. A change proposal 1 of the present example shows that the number of violations remained after the change content 1106 "exchange schedule with train set 4" is executed is 10 and the number of the operation changes or the train timetable changes required to solve these violations is 8. The number of remaining changes 1109 for a change proposal 3 of the present example being "-" means that the number of violations remained after the change content 1106 "set train J to train service cancellation" is executed is "3", but no operation planning proposals can solve all these violations.

The items of the table 1100 include a remaining change content 1110, which displays a button 1111 for displaying a remaining operation change or train timetable change content required after the change content 1106 is executed, that is, contents of the operation change and the train timetable change extracted by the planning creation unit 120 in step S505. When this button is pressed, a screen for displaying the change content appears.

A check box 1112 is a check box at which the user inputs a setting on whether to display change proposals having highest values of an evaluation index selected at a combo box 1113 among schedule candidates stored in the schedule candidate list information 113 as change proposals by a number designated in a combo box 1114. When the check box 1112 is checked, change proposals for the violation content 1101 are extracted by the designated number starting from a change proposal having the highest value of the designated evaluation index with reference to the schedule candidate list information 113, and are displayed together with values of the evaluation index. A display method is the same as the table 1100.

A check box 1115 is a check box at which the user inputs a setting on whether to display all possible change proposals. When the check box 1115 is checked, all the schedule candidates stored in the schedule candidate list information 113 are displayed together with values of the evaluation indices. A display method is the same as the table 1100.

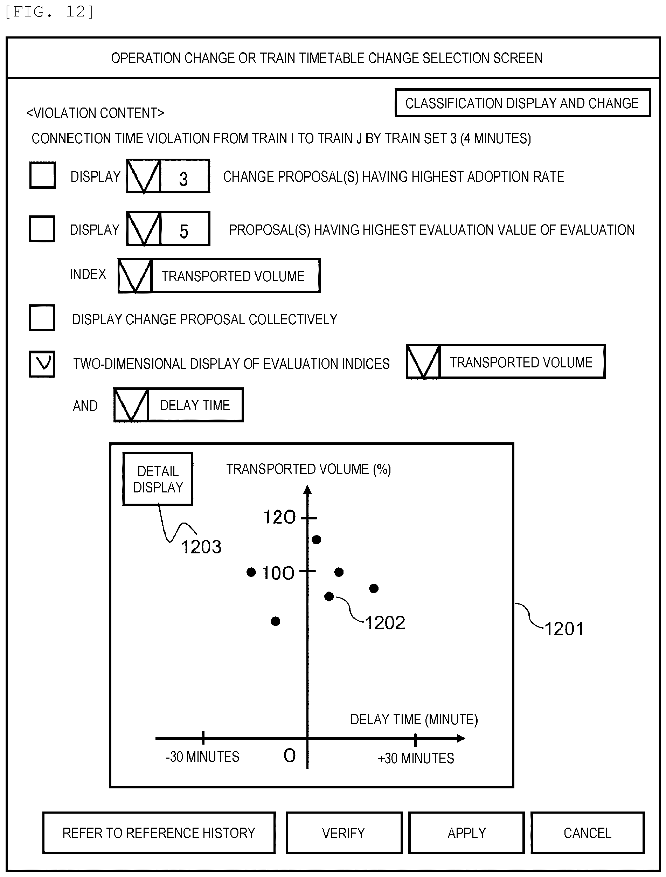

The check box 1116 is a check box at which the user inputs a setting on whether to display a change proposal in a two-dimensional display with an evaluation index designated at a combo box 1117 as a vertical axis and an evaluation index designated at a combo box 1118 as a horizontal axis. A display example when the user has performed input at the check box 1116 is illustrated in 1201 of FIG. 12.

The two-dimensional display 1201 is a scatter diagram with the transported volume as a vertical axis and a delay time as a horizontal axis. As for each schedule candidate stored in the schedule candidate list information 113, with reference to the transported volume and the delay time, a black dot 1202 is plotted at a position where the respective values intersect. For example, the black dot 1202 represents a change of a change ID "2" in the table 1100, and is plotted at a position where the transported volume is "95%" and the delay time is "+8 minutes". When the user selects one or more black dots in the display 1201 and presses a detail display button 1203, a change proposal is displayed in detail as shown in the table 1100.

A reference history reference button 1119 is a button for displaying a similar operation planning history in the past for a change proposal whose radio button is selected by input of the user. Specifically, with reference to the operation planning history information 109, the operation planning 210 having a schedule on the actual schedule 223 that is the same as a schedule changed as illustrated in the change content 1106 is extracted and displayed as in, for example, FIG. 10.

A verification button 1120 is a button for the user to verify a content of the change proposal whose radio button is selected by input of the user. When the verification button 1120 is pressed, for example, an operation planning when a change proposal is applied is displayed on the screen shown in FIG. 10.

An application button 1121 is a button for the user to apply the change proposal whose radio button is selected by input of the user. The application button 1121 is a button that is to be pressed when the user decides to apply the change proposal selected as the operation change to the violation content 1101 after the verification. When the application button 1121 is pressed, the change is confirmed and notified to each department. The confirmed changes are stored in the operation planning history information 109 and accumulated as the learning data of the history learning unit 118.

A cancel button 1122 is a button to be pressed when the present screen is to be closed without applying any change proposal.

A classification display and change button 1123 is a button for displaying details of the classification of the schedule change rule information 111 currently applied and allowing the user to change the same to a different classification as necessary to recreate a planning proposal. When the classification is changed in this button, the planning creation unit 120 newly calculates an operation planning proposal using the schedule change rule information 111 of the changed classification.

The invention is not limited to the above embodiments, and includes various modifications. For example, the above-mentioned embodiment has been described in detail for easy understanding of the invention, and is not necessarily limited to those having all the described configurations. Further, a part of the configuration of the embodiment may be added, deleted, or replaced with another configuration.

In addition, a part or all of the above configurations, functions, processing units, processing methods, and the like may be implemented by hardware through, for example, design using an integrated circuit. The configurations, functions, and the like described above may be realized by software by a processor interpreting and executing a program for realizing the respective functions. Information such as a program, a table, and a file for realizing each function can be placed in a recording device such as a memory, a hard disk, or a solid state drive (SSD), or in a recording medium such as an IC card, an SD card, or a DVD.

Further, control lines or information lines indicate what is considered necessary for description, and the control lines or information lines are not all necessarily shown in a product. In practice, it may be considered that almost all configurations are connected to each other.

In the present embodiment, a vehicle operation planning assistance apparatus for a user to select an operation change proposal with train sets of a railway as resources has been described as an application target example of the invention. When an operation planning is automatically created and applied such that evaluation indices improve according to past examples, for example, a power consumption is set as an evaluation index, an operation planning change is made automatically such that the power consumption is reduced, and thus the train set can be efficiently operated, leading to energy saving.

An application target of the resource operation planning assistance apparatus described in the present embodiment is not limited to the railway business field, and can be applied as an apparatus that supports operation planning of machines in the manufacturing industry while considering the machines as resources.

### Reference Sign List

100 resource operation planning assistance apparatus
101 storage device
102 calculation processing device
103 memory
104 input device
105 display device
106 communication I/F
107 database
108 program
109 operation planning history information
110 train timetable information
111 schedule change rule information
112 operation planning target train set information
113 schedule candidate list information
114 constraint condition information
115 evaluation index information
116 schedule change proposal information
117 schedule candidate creation unit
118 history learning unit
119 schedule candidate list creation unit
120 planning creation unit
121 operation change extraction unit
122 operation change content display unit
1001 assignment information
1002 train set name
1003 horizontal axis (time)
1004 train name
1005 violation mark
1006 cross bar representing each train
1007 merged (representing that train set 4 travels in connection with train A of train set 1)
1008 violation bar (representing assigned train having violation)
1100 table displaying change proposal
1101 violation content
1102 check box (displaying schedule candidate(s) having highest adoption rate)
1103 number of schedule candidates to display
1104 radio button
1105 change proposal ID
1106 change content
1107 transported volume (example of evaluation index)
1108 delay time (example of evaluation index)
1109 number of remaining changes
1110 remaining change content
1111 button for displaying remaining change content
1112 check box (displaying change proposal(s) having highest value of evaluation index)
1113 selection of evaluation index
1114 number of change proposals to display
1115 check box (displaying change proposals collectively)
1116 check box (two-dimensional display of change proposals in scatter diagram with two evaluation indices)
1117, 1118 evaluation index for two-dimensional display of change proposals
1119 reference history reference button
1120 verification button
1121 application button
1122 cancel button
1123 classification display and change button
1201 two-dimensional display of change proposals
1202 dot obtained by plotting change proposal with two-axis evaluation values
1203 detail display button

## Claims

1. A resource operation planning assistance apparatus, comprising:
a schedule candidate creation unit configured to create a schedule candidate of each resource;
a history learning unit configured to learn an operation planning history in advance to generate a schedule change rule;
a schedule candidate list creation unit configured to create a schedule candidate list for an operation planning target resource;
a planning creation unit configured to create, with respect to at least one violation included in an operation planning, an operation planning for solving the violation; and
an operation change content display unit, wherein
the resource operation planning assistance apparatus is configured to apply the schedule change rule created by the history learning unit in advance to the schedule candidates created by the schedule candidate creation unit to calculate an adoption rate for each schedule candidate, and the operation change content display unit is configured to display the operation planning created by the planning creation unit in a priority order by using, as input, the schedule candidate list for each resource created by the schedule candidate list creation unit.

2. The resource operation planning assistance apparatus according to claim 1, further comprising:
an operation change extraction unit configured to enumerate an operation timetable change and an operation change of the resource from the operation planning proposal created by the planning creation unit, wherein
the operation change content display unit is configured to display the operation timetable change and the operation change of the resource extracted by the operation change extraction unit.

3. The resource operation planning assistance apparatus according to claim 1, wherein
the history learning unit is configured to generate the schedule change rule by learning a tendency in a schedule change present in the operation planning history using training data for changing a weight of the adoption rate of the schedule change according to a magnitude of an evaluation index.

4. The resource operation planning assistance apparatus according to claim 3, wherein
the schedule candidate list creation unit is configured to combine the schedule candidate of each operation planning target resource with resource information and delay and trouble information, apply the combination to the schedule change rule to calculate the adoption rate for each schedule candidate such that a better schedule candidate has a higher adoption rate, and to combine each schedule candidate and the corresponding adoption rate to create the schedule candidate list.

5. The resource operation planning assistance apparatus according to claim 1, wherein
the operation change content display unit is configured to display a content of a violation to be solved, and sequentially display, as operation change proposals, a designated number of schedule candidates from a schedule candidate having a highest adoption rate among the schedule candidates for a resource having the violation to be solved, the operation change proposals each including an operation change content, a value of an evaluation index, and the number of remaining changes as display items.

6. The resource operation planning assistance apparatus according to claim 5, wherein
when the displayed operation change content is selected, the operation change content display unit displays and applies a result of the operation change and the operation timetable change from the operation planning proposal calculated by the planning creation unit, which is extracted by the operation change extraction unit.

7. The resource operation planning assistance apparatus according to claim 1, wherein
the operation change content display unit is configured to preferentially display at least one of a change proposal frequently used for a specified violation, a change proposal having a highest evaluation value for each of a plurality of evaluation indices, and a change proposal having a highest evaluation value for a specific evaluation index.

8. The resource operation planning assistance apparatus according to claim 1, wherein
the operation change content display unit is configured to, with respect to at least one specified violation, two-dimensionally display magnitudes of evaluation values of a change proposal by a scatter diagram, with two evaluation indices selected from a plurality of evaluation indices as a vertical axis and a horizontal axis.

9. A resource operation planning assistance method, comprising:
a schedule candidate creation step of creating a schedule candidate of each resource;
a history learning step of learning an operation planning history in advance to generate a schedule change rule;
a schedule candidate list creation step of creating a schedule candidate list for an operation planning target resource;
a planning creation step of creating, with respect to at least one violation included in an operation planning, an operation planning for solving the violation; and
an operation change content display step, wherein
the schedule change rule created by the history learning step in advance is applied to the schedule candidate created by the schedule candidate creation step to calculate an adoption rate for each schedule candidate, and the operation change content display step displays the operation planning created by the planning creation step in a priority order by using, as input, the schedule candidate list for each resource created by the schedule candidate list creation step.

10. The resource operation planning assistance method according to claim 9, wherein
the history learning step generates the schedule change rule by learning a tendency in a schedule change present in the operation planning history using training data for changing a weight of the adoption rate of the schedule change according to a magnitude of an evaluation index.
